# EUROPÄISCHE PATENTANMELDUNG

(11) **EP 4 286 134 A1**
(43) Veröffentlichungstag der Anmeldung: **06.12.2023**
(21) Anmeldenummer: 23173119.1
(22) Anmeldetag: 12.05.2023
(51) Int. Cl.: B29C 48/07, B29C 48/21, B29C 48/30, B29C 48/305, B29C 48/695, B29C 48/29, B29D 30/06, B29C 48/25, B29C 48/285

(54) **VERFAHREN ZUR HERSTELLUNG EINES IN RADIALER RICHTUNG EIN- ODER MEHRSCHICHTIGEN, AUS ZUMINDEST EINER KAUTSCHUKMISCHUNG BESTEHENDEN ROHLAUFSTREIFENS**

(30) Priorität: 02.06.2022 DE 102022205663
(71) Anmelder: Continental Reifen Deutschland GmbH, 30165 Hannover (DE)
(72) Erfinder: Tomforde, Willem, 30165 Hannover (DE); Römer, Justus, 30165 Hannover (DE)
(74) Vertreter: Continental Corporation

(57) **Zusammenfassung**

Die Erfindung betrifft ein Verfahren zur Herstellung eines in radialer Richtung ein- oder mehrschichtigen, aus zumindest einer Kautschukmischung bestehenden Rohlaufstreifens (1) für einen Fahrzeugluftreifen mit folgenden nacheinander sowie insbesondere zumindest teilweise parallel zueinander ablaufenden Schritten:
a) Extrudieren einer Kautschukmischungsbahn mit einer Schicht oder mehreren aufeinanderliegenden Schichten (2, 3), wobei die bzw. jede Schicht (2, 3) aus einer oder mehreren Kautschukmischung(en) besteht,
b) Transport der extrudierten Kautschukmischungsbahn durch eine Vorschablone (6), in welcher die extrudierte Kautschukmischungsbahn, im Querschnitt betrachtet, bezüglich ihrer Längserstreckung an zumindest einer Schlitzdüse (7) in Kautschukmischungsbahnteile geteilt wird und
c) stoßweises und diskontinuierliches Aufbringen von elektrisch leitendem Material auf die Trennflächen der Kautschukmischungsbahnteile mittels der Schlitzdüse(n) (7) und Vereinigen der Kautschukmischungsbahnteile nach Passieren der Schlitzdüse(n) (7) zu einem Rohlaufstreifen (1), welcher an voneinander beabstandeten Stellen von dem elektrisch leitenden Material durchsetzt ist.

## Beschreibung

Die Erfindung betrifft ein Verfahren zur Herstellung eines in radialer Richtung ein- oder mehrschichtigen, aus zumindest einer Kautschukmischung bestehenden Rohlaufstreifens für einen Fahrzeugluftreifen.

Es ist bekannt, dass es für den Rollwiderstand von Fahrzeugluftreifen vorteilhaft ist, den Laufstreifen oder eine radial äußere Laufstreifenschicht aus einer als Füllstoff Kieselsäure enthaltenden Kautschukmischung zu fertigen. Ein solcher Laufstreifen bzw. eine solche Laufstreifenschicht ist elektrisch nicht oder kaum leitend. Beim Fahren mit solchen Fahrzeugluftreifen verursachen elektrostatische Aufladungen unangenehme Entladungsvorgänge. Um dies zu verhindern, werden in Laufstreifen elektrisch leitende Passagen eingebaut, die elektrisch leitende Verbindungen zwischen der Außenfläche des Laufstreifens und dem elektrisch leitenden Unterbau im Reifen, beispielsweise dem Gummimaterial der Gürtelbandage, herstellen. Die aktuell vorwiegend eingesetzten elektrisch leitenden Passagen sind von sogenannten "Carbon Center Beams" gebildet, welche schmale, etwa mittig im Laufstreifen in Umfangsrichtung umlaufende und sich in radialer Richtung durch den Laufstreifen bis zum Unterbau erstreckende elektrisch leitende, Ruß enthaltende Gummistreifen sind.

Die Kautschukmischung für den Carbon-Center-Beam wird üblicherweise in einer Extrusionsvorrichtung in einem Extruder hergestellt und in einer Vorschablone mit den extrudierten Teilströmen aus der/den Kautschukmischung(en) für den Laufstreifen zusammengeführt. Wird ein aus einer Laufstreifenbase und einer Laufstreifencap bestehender Laufstreifen hergestellt, bei welchem die Laufstreifenbase auf einer elektrisch leitenden Kautschukmischung basiert, so ist es möglich, in der Extrusionsvorrichtung aus dieser Kautschukmischung den Carbon-Center-Beam mitzuformen.

Ein Verfahren der eingangs genannten Art ist beispielsweise aus der WO 2016/124268 A1 bekannt. Bei diesem Verfahren wird eine extrudierte Kautschukmischungsbahn in Querrichtung geteilt, wobei die Trennflächen der Kautschukmischungsbahnteile mit einer zumindest ein elektrisch leitendes Material enthaltenden Suspension benetzt werden. Unmittelbar danach werden die Kautschukmischungsbahnteile wieder vereint, sodass ein Rohlaufstreifen gebildet wird. Mittels des Verfahrens wird im Laufstreifen eine dünne und umlaufende elektrisch leitende Passage gebildet.

Aus der DE 10 2006 036 508 A1 ist ein weiteres Verfahren zur Herstellung elektrisch leitender, aus einem Gummimaterial bestehender Passagen in einem Laufstreifen eines Fahrzeugluftreifens bekannt. In den Laufstreifen des fertig aufgebauten Rohreifens wird punktuell eine elektrisch leitende Flüssigkeit injiziert, welche sich unter Bilden elektrisch leitender Passagen in die Polymermatrix einlagert.

Aus der NL 2006873 C2 ist ein Verfahren zur Herstellung eines zweischichtigen Rohlaufstreifens bekannt. Bei diesem Verfahren werden in eine coextrudierte Kautschukmischungsbahn mit einem rotierenden scheibenförmigen Messer Schlitze geschnitten, in welche eine elektrisch leitende Gummilösung eingebracht wird. Die Gummilösung bildet im fertigen Reifen elektrisch leitende Passagen.

Insbesondere mit dem aus der WO 2016/124268 A1 bekannte Verfahren lassen sich auf besonders rationelle und gut automatisierbare Weise dünne umlaufende elektrisch leitende Passagen bilden. Die Kautschukmischungsbahnteile müssen beim Wiedervereinen besonders zuverlässig zusammenhalten, da andernfalls die Gefahr besteht, dass der gebildete Rohlaufstreifen auseinanderfällt. Dies ist bei der Auswahl des elektrisch leitenden Materials zu beachten, sodass nur bestimmte solcher Materialien geeignet sind.

Der Erfindung liegt daher die Aufgabe zugrunde, ein Verfahren der eingangs genannten Art im Hinblick auf die Auswahl des elektrisch leitenden Materials flexibler auszuführen.

Gelöst wird die gestellte Aufgabe erfindungsgemäß durch ein Verfahren der eingangs genannten Art mit folgenden nacheinander sowie insbesondere zumindest teilweise parallel zueinander ablaufenden Schritten:
a) Extrudieren einer Kautschukmischungsbahn mit einer Schicht oder mehreren aufeinanderliegenden Schichten, wobei die bzw. jede Schicht aus einer oder mehreren Kautschukmischung(en) besteht,
b) Transport der extrudierten Kautschukmischungsbahn durch eine Vorschablone, in welcher die extrudierte Kautschukmischungsbahn, im Querschnitt betrachtet, bezüglich ihrer Längserstreckung an zumindest einer Schlitzdüse in Kautschukmischungsbahnteile geteilt wird und
c) stoßweises und diskontinuierliches Aufbringen von elektrisch leitendem Material auf die Trennflächen der Kautschukmischungsbahnteile mittels der Schlitzdüse(n) und Vereinigen der Kautschukmischungsbahnteile nach Passieren der Schlitzdüse(n) zu einem Rohlaufstreifen, welcher an voneinander beabstandeten Stellen von dem elektrisch leitenden Material durchsetzt ist.

Beim erfindungsgemäßen Verfahren wird in Schritt c) elektrisch leitendes Material stoßweise und diskontinuierlich, also impulsartig und vereinzelt sowie jeweils in kleiner Menge, auf die Trennflächen der Kautschukmischungsbahnteile aufgebracht. Das elektrisch leitende Material wird somit punktuell oder in kurzen Streifen auf die Trennflächen aufgebracht. Die in Schritt c) zu einem Rohlaufstreifen zusammengefügten Kautschukmischungsbahnteile halten an den von elektrisch leitendem Material freien Stellen der Trennflächen besonders gut zusammen, sodass der Rohlaufstreifen insgesamt besonders gut zusammenhält. Der durch das erfindungsgemäße Verfahren erhaltene Rohlaufstreifen lässt sich daher ideal in an sich bekannter Weise weiterverarbeiten. Bezüglich der Auswahl des elektrisch leitenden Materials gibt es daher kaum Einschränkungen.

Gemäß einer bevorzugten Ausführung wird in Schritt c) als elektrisch leitendes Material eine Suspension aufgebracht.

Bei der bevorzugten Ausführung ist es von Vorteil, wenn die in Schritt c) aufgebrachte Suspension elektrisch leitende Partikel, insbesondere Rußpartikel, Karbonnanotubes, Karbonfasern oder Metallpartikel, enthält.

Gemäß einer vorteilhaften Variante der bevorzugten Ausführung enthält die in Schritt c) aufgebrachte Suspension zumindest eine Flüssigkeit aus der Gruppe Rapsöl, MBS-Öl, TDAE-Öl, RAE-Öl, paraffinisches Öl und flüssiger Kautschuk.

Gemäß einer alternativen vorteilhaften Variante ist die in Schritt c) aufgebrachte Suspension eine Gummilösung.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 einen Querschnitt durch einen extrudierten Rohlaufstreifen eines Fahrzeugluftreifens,
Fig. 2 eine Schnittansicht im vorderen Bereich einer Extrusionsvorrichtung zur Herstellung des Rohlaufstreifens,
Fig. 3 eine Vorderansicht gemäß der in Fig. 2 durch den Pfeil S₃ angedeuteten Sichtrichtung,
Fig. 4 eine Ansicht im Bereich einer Schlitzdüse und
Fig. 5 eine Draufsicht auf einen Umfangsabschnitt des Rohlaufstreifens aus Fig. 1.

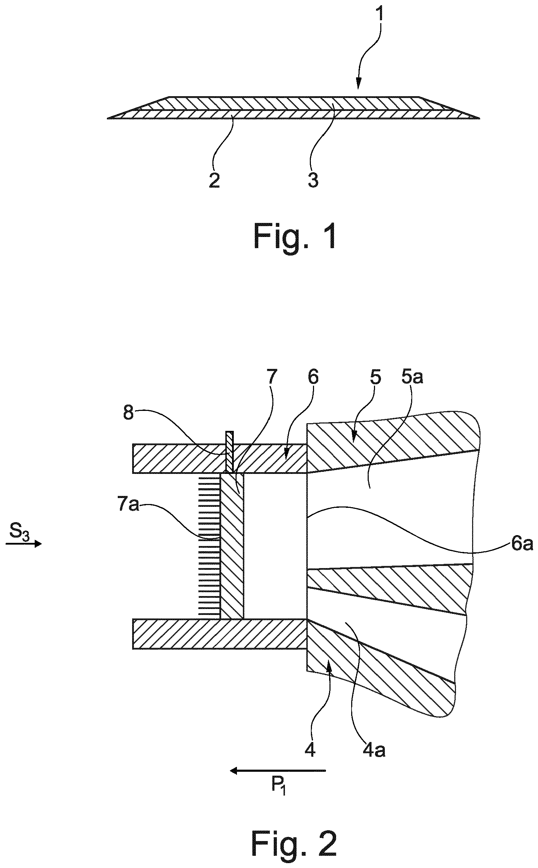

Fig. 1 zeigt einen Rohlaufstreifen 1 aus einer im vulkanisierten Reifen eine Laufstreifenbase bildenden Schicht 2 und einer im vulkanisierten Reifen eine Laufstreifencap bildenden Schicht 3. Die Schichten 2, 3 sind jeweils aus einer Kautschukmischung hergestellt, wobei sich die Kautschukmischung der Schicht 2 von jener der Schicht 3 unterscheidet. Das sich bei der Vulkanisation aus der Schicht 3 bildende Gummimaterial ist elektrisch nicht leitend und das sich bei der Vulkanisation aus der Schicht 2 bildende Gummimaterial ist vorzugsweise elektrisch leitend.

Fig. 2 zeigt einen Teilbereich eines vorderen Abschlussbereiches einer Extrusionsvorrichtung zur Extrusion des Rohlaufstreifens 1 (Fig. 1). Die Strömungsrichtung (Extrusionsrichtung) der Extrusionsvorrichtung ist durch einen Pfeil P₁ gekennzeichnet. Die Extrusionsvorrichtung umfasst einen unteren Extruder 4, einen über diesen befindlichen, oberen Extruder 5, eine an die Extruder 4, 5 anschließende Vorschablone 6, eine in der Vorschablone 6 eingebaute Schlitzdüse 7, ein nicht gezeigtes, bezogen auf die Strömungsrichtung der Schlitzdüse 7 nachgeschaltetes, formgebendes Mundstück und eine von außerhalb zur Schlitzdüse 7 führende, als Rohr oder Schlauch ausgeführte Zuleitung 8. Das Mundstück kann sich in der Vorschablone 6 befinden oder der Vorschablone 6 nachgeschaltet sein.

Die Extruder 4, 5 weisen jeweils einen Strömungskanal 4a (Extruder 4), 5a (Extruder 5) auf, wobei die Strömungskanäle 4a, 5a eine in an sich bekannter Weise abnehmende Querschnittshöhe und eine in an sich bekannter Weise vergrößernde Breite aufweisen sowie an der Vorschablone 6 enden.

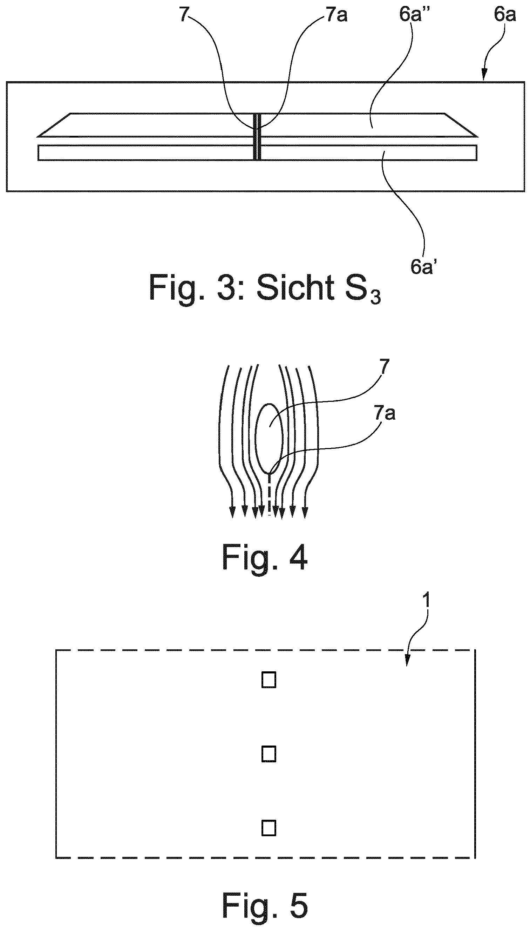

Die Vorschablone 6 weist ein den Extrudern 4, 5 zugewandtes, am Übergang zu den Extrudern 4, 5 eingebautes Schablonenblech 6a auf, welches gemäß Fig. 3 eine am Strömungskanal 4a des unteren Extruders 4 anschließende, untere Ausnehmung 6a` und eine am Strömungskanal 5a des oberen Extruders 5 anschließende, obere Ausnehmung 6a" aufweist, wobei die Ausnehmungen 6a`, 6a" jeweils eine ausgeprägte Quererstreckung besitzen.

Wie Fig. 3 ferner zeigt, weist die Schlitzdüse 7 einen dem nicht gezeigten, formgebenden Mundstück zugewandten Schlitz 7a auf. Die Schlitzdüse 7 ist derart senkrecht zur Extrusionsrichtung (vergl. Fig. 2: Pfeil P₁) positioniert, dass sie - betrachtet in Frontansicht - die Ausnehmungen 6a`, 6a" jeweils in Querrichtung teilt. Bei der gezeigten Ausführungsform ist die Schlitzdüse 7 mittig in die Vorschablone 6 eingebaut und teilt die Ausnehmungen 6a`, 6a" daher jeweils in zwei Hälften.

Zur Herstellung des Rohlaufstreifens 1 (Fig. 1) wird im oberen Strömungskanal 5a (Fig. 2) die Kautschukmischung für die die Laufstreifencap bildende Schicht 3 (Fig. 1) und im unteren Strömungskanal 4a (Fig. 2) die Kautschukmischung für die die Laufstreifenbase bildende Schicht 2 (Fig. 1) transportiert. Die Kautschukmischung für die Schicht 3 wird durch die obere Ausnehmung 6a" (Fig. 3) des Schablonenbleches 6a (Fig. 2, Fig. 3) und die Kautschukmischung für die Schicht 2 wird durch die untere Ausnehmung 6a` (Fig. 3) des Schablonenbleches 6a (Fig. 2, Fig. 3) gedrückt, wodurch die Kautschukmischungen als entsprechend geformte Kautschukmischungsbahn coextrudiert werden. Die Kautschukmischungsbahn ist daher von den aufeinanderliegenden Schichten 2, 3 gebildet. Die Kautschukmischungsbahn wird durch die Vorschablone 6 (Fig. 2) transportiert und an der Schlitzdüse 7 (Fig. 2 bis Fig. 4), im Querschnitt betrachtet, bezüglich ihrer Längserstreckung in zwei entsprechend geformte Kautschukmischungsbahnteile geteilt, welche seitlich an der Schlitzdüse 7 vorbeifließen (angedeutet in Fig. 4).

Die Schlitzdüse 7 wird über die Zuleitung 8 (Fig. 2) mit einer zumindest ein elektrisch leitendes Material beinhaltenden Suspension beschickt, welche vor dem Zusammenfließen der zwei Kautschukmischungsbahnteile, nach dem Passieren der Schlitzdüse 7 durch den Schlitz 7a auf die Trennflächen der Kautschukmischungsbahnteile stoßweise und diskontinuierlich aufgebracht, insbesondere stoßweiße und diskontinuierlich aufgesprüht, wird (Fig. 4). "Stoßweises und diskontinuierliches Aufbringen" bedeutet, dass der Ausstoß der Suspension aus dem Schlitz 7a nicht kontinuierlich, sondern in definierten Zeitintervallen sowie jeweils kurzzeitig erfolgt. Das erwähnte, nicht gezeigten Mundstück ist insbesondere derart positioniert, dass die Suspension auf die Trennflächen der Kautschukmischungsbahnteile beim Eintreten in das Mundstück erfolgt.

Die Kautschukmischungsbahnteile werden nach Passieren der Schlitzdüse 7 im Mundstück vereinigt (angedeutet in Fig. 4), wodurch der Rohlaufstreifen 1 (Fig. 1) gebildet wird. Durch das stoßweise Aufbringen der Suspension ist der Rohlaufstreifen 1 an mehreren, voneinander beabstandeten und voneinander getrennten Stellen von dem von der Suspension stammenden elektrisch leitenden Material durchsetzt (Fig. 5). Bei der Vulkanisation des Reifens werden aus dem elektrisch leitenden Material mehrere, den Laufstreifen in radialer Richtung durchsetzende, in Umfangsrichtung aufeinanderfolgende, lokale elektrisch leitende Passagen gebildet.

Das stoßweise und diskontinuierliche Aufbringen der das elektrisch leitende Material beinhaltenden Suspension erfolgt in einer solchen Weise, dass im fertigen Reifen die den Laufstreifen in radialer Richtung durchsetzenden, elektrisch leitenden Passagen derart über den Reifenumfang verteilt sind, dass sich beim Abrollen des Reifens jeweils zumindest eine elektrisch leitende Passage in der Bodenaufstandsfläche befindet. Das stoßweise Aufbringen erfolgt daher in einem auf die Strömungsgeschwindigkeit (Extrusionsgeschwindigkeit) abgestimmten Zeitintervall.

Die Suspension umfasst ein flüssiges Dispersionsmedium sowie elektrisch leitende Partikel, insbesondere Rußpartikel, beispielsweise Ruß N 339 oder Ruß N 121, Karbonnanotubes, Karbonfasern oder Metallpartikel. Das flüssige Dispersionsmedium ist vorzugsweise eine Flüssigkeit, die üblicherweise in für Laufstreifen verwendeten Kautschukmischungen eingesetzt wird, wie beispielsweise Rapsöl, MBS-Öl, TDAE-Öl, RAE-Öl, paraffinisches Öl oder flüssiger Kautschuk. Möglich ist auch die Verwendung von Gummilösungen, welche in einem Lösungsmittel dispergierte Gummipartikel sowie beispielsweise Ruß und übliche Vulkanisationschemikalien enthalten.

Unter einem elektrisch leitenden Gummimaterial, einer elektrisch leitenden Passage, einem elektrisch leitenden Material und elektrisch leitenden Partikeln, wird ein solches bzw. eine solche bzw. werden solche verstanden, welches bzw. welche einen spezifischen elektrischen Widerstand von ≤ 10⁸ Ohm cm aufweist bzw. aufweisen.

Die Erfindung ist auf das beschriebene Ausführungsbeispiel nicht beschränkt.

Es können mehrere, insbesondere bis zu drei, Schlitzdüsen 7 vorgesehen sein. Die Extrusionsvorrichtung kann - durch eine entsprechende Anzahl und Anordnung von Extrudern - dafür ausgelegt sein, einen in radialer Richtung insbesondere ein-, drei- oder vierschichtig aufgebauten Rohlaufstreifen herzustellen. Ferner kann die Extrusionsvorrichtung dafür ausgelegt sein, Rohlaufstreifen mit einer oder mehreren in axialer Richtung geteilten Schichten, also mit Schichten, welche aus verschiedenen Kautschukmischungen gefertigte Schichtteile aufweisen, herzustellen. Die Anzahl der eingesetzten unterschiedlichen Kautschukmischungen richtet sich daher nach dem jeweiligen Aufbau des Laufstreifens.

### Bezugszeichenliste

- 1: Rohlaufstreifen
- 2: Schicht
- 3: Schicht
- 4: Extruder
- 4a: Strömungskanal
- 5: Extruder
- 5a: Strömungskanal
- 6: Vorschablone
- 6a: Schablonenblech
- 6a': untere Ausnehmung
- 6a": obere Ausnehmung
- 7: Schlitzdüse
- 8: Zuleitung
- P₁: Pfeil
- S₃: Pfeil (Sichtrichtung)

## Patentansprüche

1. Verfahren zur Herstellung eines in radialer Richtung ein- oder mehrschichtigen, aus zumindest einer Kautschukmischung bestehenden Rohlaufstreifens (1) für einen Fahrzeugluftreifen mit folgenden nacheinander sowie insbesondere zumindest teilweise parallel zueinander ablaufenden Schritten:
a) Extrudieren einer Kautschukmischungsbahn mit einer Schicht oder mehreren aufeinanderliegenden Schichten (2, 3), wobei die bzw. jede Schicht (2, 3) aus einer oder mehreren Kautschukmischung(en) besteht,
b) Transport der extrudierten Kautschukmischungsbahn durch eine Vorschablone (6), in welcher die extrudierte Kautschukmischungsbahn, im Querschnitt betrachtet, bezüglich ihrer Längserstreckung an zumindest einer Schlitzdüse (7) in Kautschukmischungsbahnteile geteilt wird und
c) stoßweises und diskontinuierliches Aufbringen von elektrisch leitendem Material auf die Trennflächen der Kautschukmischungsbahnteile mittels der Schlitzdüse(n) (7) und Vereinigen der Kautschukmischungsbahnteile nach Passieren der Schlitzdüse(n) (7) zu einem Rohlaufstreifen (1), welcher an voneinander beabstandeten Stellen von dem elektrisch leitenden Material durchsetzt ist.

2. Verfahren nach Anspruch 1, **dadurch gekennzeichnet, dass** in Schritt c) als elektrisch leitendes Material eine Suspension aufgebracht wird.

3. Verfahren nach Anspruch 2, **dadurch gekennzeichnet, dass** die in Schritt c) aufgebrachte Suspension elektrisch leitende Partikel, insbesondere Rußpartikel, Karbonnanotubes, Karbonfasern oder Metallpartikel, enthält.

4. Verfahren nach Anspruch 2 oder 3, **dadurch gekennzeichnet, dass** die in Schritt c) aufgebrachte Suspension zumindest eine Flüssigkeit aus der Gruppe Rapsöl, MBS-Öl, TDAE-Öl, RAE-Öl, paraffinisches Öl und flüssiger Kautschuk enthält.

5. Verfahren nach Anspruch 2 oder 3, **dadurch gekennzeichnet, dass** die in Schritt c) aufgebrachte Suspension eine Gummilösung ist.
